# EUROPEAN PATENT APPLICATION

(11) **EP 1 919 178 A1**
(43) Date of publication of application: **07.05.2008**
(21) Application number: 07119463.3
(22) Date of filing: 29.10.2007
(51) Int. Cl.: H04M 3/436, H04M 1/663

(54) **Application and communication network for filtering vocal information**

(30) Priority: 03.11.2006 FR 0654706
(71) Applicant: Alcatel Lucent, 75008 Paris (FR)
(72) Inventor: Sens, Thierry, 78000, VERSAILLES (FR); Tranchant, William, 78120, SAINT CYR L'ECOLE (FR)
(74) Representative: Hedarchet, Stéphane

(57) **Abstract**

The invention concerns an application for filtering vocal information transmitted in a communication network between transmitters and receivers, said application comprising a system for marking of a transmitter by a receiver, said system being adapted to enable the receiver to associate a filtering mark with said transmitter, said marking system comprising means for actuation by the receiver on reception of vocal information from the transmitter, means for identification of an attribute of the transmitter and means for storing a match between the attribute and the associated filtering mark by the receiver, said application further comprising a system for filtering the information addressed to the receiver, said filtering system comprising means for identifying an attribute relating to a transmitter, means for comparing the identified attribute with a stored attribute, if any, so as to define the filtering mark of the transmitter, if any, and means for routing vocal information in the network as a function of the filtering mark or its absence. The invention also concerns a communication network enabling such filtering of vocal information.

## Description

The invention concerns an application for filtering vocal information transmitted in a communication network between transmitters and receivers, and a communication network enabling such filtering of vocal information.

The growth of the communication of vocal information, as much in the form of telephone conversations as in the form of voice messages, means that a receiver is more and more frequently subjected to unsolicited vocal information.

This type of vocal information, for example of a promotional kind, is a great nuisance for the receiver,

An object of the invention is to alleviate this nuisance by proposing an application and a network enabling filtering of vocal information.

To this end, and in accordance with a first aspect, the invention proposes an application for filtering vocal information transmitted in a communication network between transmitters and receivers, said application comprising a system for marking of a transmitter by a receiver, said system being adapted to enable the receiver to associate a filtering mark with said transmitter, said marking system comprising means for actuation by the receiver on reception of vocal information from the transmitter, means for identification of an attribute of the transmitter and means for storing a match between the attribute and the associated filtering mark by the receiver, said application further comprising a system for filtering the information addressed to the receiver, said filtering system comprising means for identifying an attribute relating to a transmitter, means for comparing the identified attribute with a stored attribute, if any, so as to define the filtering mark of the transmitter, if any, and means for routing vocal information in the network as a function of the filtering mark or its absence.

Accordingly, when the receiver receives vocal information from the transmitter, said receiver can actuate the marking system so that, on the next transmission of vocal information from said transmitter, that information can be routed in the network in the manner that the receiver wishes. In particular, the transmission of vocal information that is not solicited by a receiver can then be prevented, as much in the context of a telephone conversation as in that of transmission to the voice mailbox of said receiver.

In accordance with a second aspect, the invention proposes a network for communication of vocal information between transmitters and receivers, said network comprising at least one communication application and;
- a system for marking of a transmitter by a receiver, said system being adapted to enable the receiver to associate a filtering mark with said transmitter, said marking system comprising means for actuation by the receiver on reception of vocal information from the transmitter, means for identification of an attribute of the transmitter and means for storing a match between the attribute and the associated filtering mark by the receiver, and
- a system for filtering information addressed to the receiver, said filtering system comprising means for identification of an attribute relating to a transmitter, means for comparison of the identified attribute with a stored attribute, if any, so as to define the filtration mark of the transmitter, if any, and means for routing vocal information in the network as a function of the filtering mark or the absence thereof.

Other features and advantages of the invention will become apparent in the following description of various particular embodiments, given with reference to the appended drawings, in which:

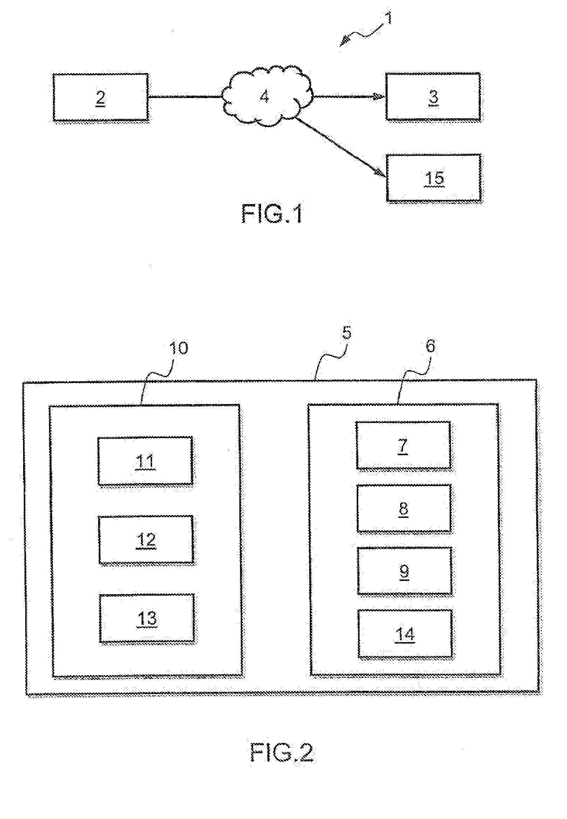

- figure 1 is a diagram showing a communication network;
- figure 2 is a diagram showing an application in accordance with the invention; and

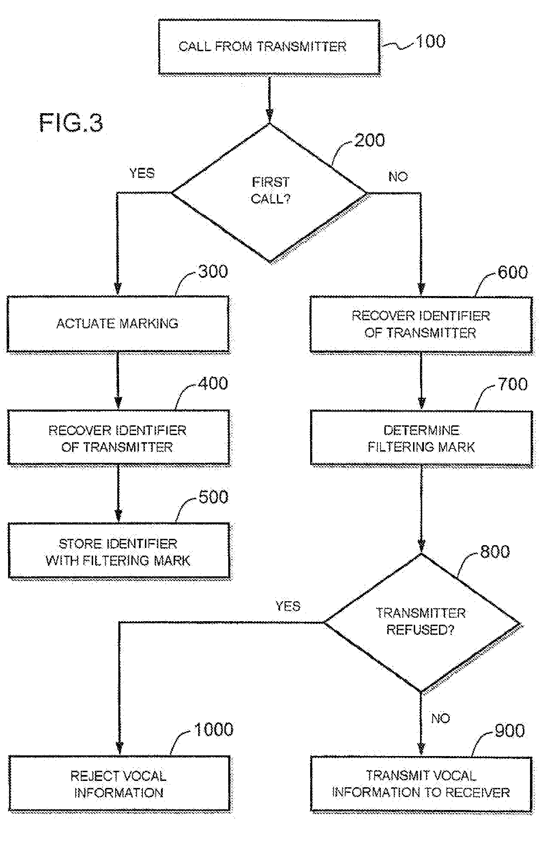

- figure 3 is a diagram showing various steps executed by means of an application in accordance with the invention.

The invention concerns a network 1 for communication of vocal information between transmitters 2 and receivers 3. In one embodiment, a network 1 of this kind can be of the PABX (Private Automatic Branch exchange) type connecting internal telephone extensions with an external communication network 4.

Alternatively, the communication network can be of PSTN (Public Switched Telephone Network), PLMN (Public Land Mobile Network), Internet, LAN (Local Area Network) or IP (Internal Protocol) type.

The communication network 1 further comprises a communication application 5, for example of IP XML (extensible Markup Language) telephony type, or other forms of means for communication via a computer,

The communication network 1 according to the invention further integrates a function for filtering vocal information transmitted between the transmitters 2 and the receivers 3. The vocal information can be of the telephone conversation between two interlocutors type and/or of the vocal message from an interlocutor to the voice mailbox of another person type.

In particular, and as described hereinafter, this function can be provided in the context of an application 5 that is intended to be integrated into the communication network 1 according to the invention.

The application 5 comprises firstly a system 6 for marking of a transmitter 2 by a receiver 3, said system 6 being adapted to enable the receiver 3 to associate a filtering mark with said transmitter 2,

The marking system 6 comprises means 7 for actuation by the receiver 3 on reception of vocal information from the transmitter 2, means 8 for identification of an attribute of the transmitter 2 and means 9 for storing a match between the attribute and the associated filtering mark by the receiver 3.

Secondly, the application 5 comprises a system 10 for filtering the information intended for the receiver 3. The filtering system 10 comprises means 11 for identification of an attribute relating to a transmitter 2, means 12 for comparison of the identified attribute with a stored attribute, if any, so as to define the filtering mark of the transmitter 2, if any, and means 13 for routing vocal information in the network 1 as a function of the filtering mark or its absence.

In one embodiment, the attribute of the transmitter 2 is an identifier of said transmitter 2 in the communication network 1, for example the telephone number available in a PABX type network.

On the first call (100, 200) from the transmitter 2, the receiver 3 can actuate (300) the marking system 6, for example by means of a key provided on the communication terminal or on the communication computer. The identification means 8 then recover (400) the identifier of the transmitter 2 that is stored (500) with the filtering mark required by the receiver 3. In one embodiment, the filtering mark comprises a transmitter 2 accepted state and a transmitter refused state,

Thereafter, at the time of another call (100, 200) from the transmitter 2 to the receiver 3, the identifier of the transmitter 2 is recovered (600) in the network 1 so as to determine (700) the associated filtering mark.

Accordingly, the routing means 13 can transmit (800, 900) to the receiver 3 the vocal information from an accepted transmitter 2 or from a transmitter 2 with no filtering mark, and reject (1000) vocal information from a refused transmitter 2. In the latter case, the information that is not wanted by the receiver 3 is therefore rejected before it is presented to the receiver 3, which makes using the communication network 1 more user friendly.

In another embodiment, possibly complementary to the preceding embodiment, the identification means 8 are adapted to identify an attribute from the vocal information transmitted by the transmitter 2. In one embodiment, the attribute identified from the information is a voiceprint of the transmitter 2,

When the marking system 6 is actuated, the identification means recover the voiceprint of the transmitter 2 in order to store it with the filtering mark required by the receiver 3. The voiceprint can be used as the main criterion or in the case of a transmitter 2 the identifier whereof is not available in the communication network 1.

Thereafter, at the time of another call from the transmitter 2 to the receiver 3, the voice of the transmitter 2 is compared to the stored voiceprints in order to determine the associated filtering mark. For this purpose, the comparison means 12 can transmit a message to the transmitter 2 so as to be able to identify its voice in the response that it must make to said message.

The marking system 6 can further comprise an interface 14 enabling the receiver 3 to associate specific information with the filtering mark of the transmitter 2. The information is stored in the storage means 9 and the routing means 13 are adapted to transmit said information to the transmitter 2.

In one embodiment, the interface 14 comprises text input means, the routing means 13 comprising means for reading said text addressed to the transmitter 2. This embodiment is particularly advantageous in the case of a telephone conversation since the receiver 3 can then enter a text message on actuation of the marking system 6, for example to state that the call is undesirable. At the time of a subsequent call, the text can then be read at the transmitter 2 by means of appropriate software.

In another embodiment, the interface 14 comprises means for recording a vocal message, the routing means 13 comprising means for reading said text message addressed to the transmitter. This embodiment is particularly advantageous in the case of a telephone message because the recorded message can then serve as a welcome message personalized as a function of the transmitter 2. In this latter case, the network 1 further comprises a voice messaging system 15 for the receiver 3, the routing means 13 allowing or refusing a transmitter 3 access to said messaging system 15 as a function of its filtering mark.

## Claims

1. Application (5) for filtering vocal information transmitted in a communication network (1) between transmitters (2) and receivers (3), said application (5) comprising a system (6) for marking of a transmitter (2) by a receiver (3), said system (6) being adapted to enable the receiver (3) to associate a filtering mark with said transmitter (2), said marking system (6) comprising means (7) for actuation by the receiver (3) on reception of vocal information from the transmitter (2), means (8) for identification of an attribute of the transmitter (2) and means (9) for storing a match between the attribute and the associated filtering mark by the receiver (3), said application (5) further comprising a system (10) for filtering the information addressed to the receiver (3), said filtering system (10) comprising means (11) for identifying an attribute relating to a transmitter (2), means (12) for comparing the identified attribute with a stored attribute, if any, so as to define the filtering mark of the transmitter (2), if any, and means (13) for routing vocal information in the network (1) as a function of the filtering mark or its absence.

2. Application (5) according to claim 1, **characterized in that** the attribute of the transmitter (2) is an identifier of said transmitter (2) in the communication network (1).

3. Application (5) according to claim 1 or 2, **characterized in that** the identification means are adapted to identify an attribute from the vocal information transmitted by the transmitter (2).

4. Application (5) according to claim 3, **characterized in that** the attribute identified from the information is a voiceprint of the transmitter (2).

5. Application (5) according to any one of claims 1 to 4, **characterized in that** the marking system further comprises an interface (14) enabling the receiver (3) to associate specific information with the filtering mark of the transmitter (2), said information being stored in the storage means (9), the routing means (13) being adapted to transmit said information to the transmitter (2).

6. Application (5) according to claim 5, **characterized in that** the interface (14) comprises text message input means, the routing means (13) comprising means for reading said text message addressed to the transmitter (2).

7. Application (5) according to claim 5, **characterized in that** the interface comprises means for storing a vocal message, the routing means (13) comprising means for reading said text message addressed to the transmitter (2).

8. Application (5) according to any one of claims 1 to 7, **characterized in that** the filtering mark comprises an accepted transmitter state and a refused transmitter state.

9. Application (5) according to claim 8, **characterized in that** the routing means are adapted to transmit vocal information from an accepted transmitter (2) to the receiver (3) and to reject vocal information from a refused transmitter (2).

10. Network (1) for communication of vocal information between transmitters (2) and receivers (3), said network (1) comprising at least one communication application (5) and:
- a system (6) for marking of a transmitter (2) by a receiver (3), said system (6) being adapted to enable the receiver (3) to associate a filtering mark with said transmitter (2), said marking system (6) comprising means (7) for actuation by the receiver (3) on reception of vocal information from the transmitter (2), means (8) for identification of an attribute of the transmitter (2) and means (9) for storing a match between the attribute and the associated filtering mark by the receiver (3):
- a system (10) for filtering information addressed to the receiver (3), said filtering system (10) comprising means (11) for identification of an attribute relating to a transmitter (2), means (12) for comparison of the identified attribute with a stored attribute, if any, so as to define the filtration mark of the transmitter (2), if any, and means (13) for routing vocal information in the network (1) as a function of the filtering mark or the absence thereof.

11. Communication network (1) according to claim 10, said network (1) further comprising a vocal messaging system (15) for the receiver (5), said routing means (13) allowing or refusing a transmitter access to said messaging system (15) as a function of its filtering mark.
